# EUROPÄISCHE PATENTSCHRIFT

(11) **EP 0 685 383 B1**
(45) Veröffentlichungstag und Bekanntmachung des Hinweises auf die Patenterteilung: **06.10.1999**
(21) Anmeldenummer: 95810327.7
(22) Anmeldetag: 17.05.1995
(51) Int. Cl.: B62J 1/06, B62K 19/36, B62K 21/22, B62K 21/20, F16F 9/02, F16B 7/14, F16F 9/43

(54) **Sattelstütze, insbesondere für ein Fahrrad**
Saddle support, especially for a bicycle
Support de selle, en particulier pour une bicyclette

(30) Priorität: 01.06.1994 CH 169694
(43) Veröffentlichungstag der Anmeldung: 06.12.1995
(73) Patentinhaber: Zurfluh, Louis, 6462 Seedorf (CH); REICHMUTH, Mathias, 6403 Küssnacht am Rigi (CH)
(72) Erfinder: Zurfluh, Louis, 6462 Seedorf (CH); REICHMUTH, Mathias, 6403 Küssnacht am Rigi (CH)
(74) Vertreter: Luchs, Willi

(56) Entgegenhaltungen:
- EP-A- 0 225 012
- CH-A- 104 004
- DE-A- 2 900 780
- DE-U- 9 401 934
- FR-A- 2 399 353
- US-A- 4 807 856

## Beschreibung

Die Erfindung betrifft eine Sattelstütze, insbesondere für ein Fahrrad, mit einem äusseren Mantelrohr, das in einem offenen Rohr des Fahrradrahmens vorzugsweise in unterschiedlicher Höhe positionerbar ist und in dem eine Kolben/Zylinder-Einheit ausgebildet ist, die eine am oberen Ende den Sattel haltende Kolbenstange und eine mit einem komprimierbaren gasförmigen Medium gefüllte Kammer aufweist.

Bei Fahrrädern und insbesondere bei Mountain-Bikes soll der Sattel in bezug auf den Fahrradrahmen während der Fahrt entsprechend der Geländeneigung eingestellt werden können, wobei dieser beim Abwärtsfahren nach unten, indessen beim Bergauffahren höher eingestellt wird. Der Sattel soll zudem federnd gelagert sein, so dass durch diese Federung aufs Velo wirkende Schläge allen voran bei hügeligem Gelände aufgefangen werden können.

Bei einer bekannten Sattelstütze nach der eingangs erwähnten Gattung (CH-PS 104 004) ist in einem Rohrstück des Fahrradrahmens ein hohlzylindrisches Gehäuse eingesetzt, welches eine den Sattel stützende Stange aufweist, die auf-und abverschiebbar angeordnet und mit einem Kolben versehen ist, der auf einem im Rohrstück eingeschlossenen Luftkissen federnd abgestützt ist. Die auf der unteren Seite den Kolben aufweisende und in einem Lager des Gehäuses verdrehsicher geführte Stange ist am oberen Ende abgewinkelt und an ihr der Sattel befestigt. Um die Bewegung der Stange nach oben zu begrenzen, ist die Sattelstütze durch einen Riemen mit dem Fahrradrahmen verbunden und es ist dadurch verhindert, dass die Sattelstütze durch das Luftkissen aus dem Fahrradrahmen herausbewegt wird.

Bei dieser bekannten Sattelstütze mit der eingebauten Federung ist zwar fernerhin erwähnt, dass der Kompressionsraum an einen Ablassstutzen anschliessbar sein könnte und mittels einer Pumpe die Stange auf- und abwärts bewegt werden könnte; eine solche Höhenverstellung des Sattels kann aber nur dann vorgenommen werden, wenn der Fahrer vom Velo absteigt und die entsprechenden Manipulationen ausführt.

*Bei einem bekannten Dispositiv nach der Druckschrift FR-A-2 399 353 zum lösbaren Festhalten einer Sattelstütze ist eine Kulisse, die mit dem den Sattel haltenden Rohr verbindbar ist, und ein durch einen Exzenter quer zur Stange verschiebbarer Stössel vorgesehen. Zwischen diesem Stössel und der Kulisse ist eine keilförmige Schräge ausgebildet, durch welche nebst der gewünschten, senkrecht zum Rohr verlaufenden Kraftkomponente eine zusätzliche, in Richtung der Stange wirkende Kraftkomponente entsteht, die eine unnötige, möglicherweise sogar gefährliche Belastung auf das Rohr erzeugt. Ausserdem kann durch diese Anordnung eine solche Keilwirkung auf die Kulisse entstehen, dass sich der Stössel nicht mehr lösen lässt. Für das Andrücken der Kulisse an das Sattelrohr ist eine Biegefeder vorgesehen, welche auf den Exzenter und den Stössel wirkt, was eine relativ umständliche Anordnung darstellt.*

Der vorliegenden Erfindung wurde demgegenüber die Aufgabe zugrundegelegt, eine Sattelstütze nach der eingangs beschriebenen Gattung derart weiterzubilden, dass sie aus einer äusserst einfachen Konstruktion besteht, der Sattel federnd oder starr zum Fahrradgestell einstellbar ist und/oder der Sattel in der Höhe während dem Fahren über einen zweckmässigen Hubbereich verstellt und in einer beliebigen Position fixiert werden kann. *Ausserdem soll eine Klemmvorrichtung zum Festhalten bzw. zum Lösen der Sattelstütze geschaffen werden, welche bei einfacher und kompakter Bauweise eine sichere und dauerhafte Funktionstüchtigkeit gewährleistet, damit sich der Sattel beim Fahren nicht unvorgesehen in der Höhe verstellt.*

Erfindungsgemäss ist die Aufgabe dadurch gelöst, dass die Kolbenstange und mit ihr der Sattel zum Mantelrohr federnd und/oder in der Höhe verstellbar angeordnet sind, dass diese Kolbenstange mittels einer Klemmvorrichtung zu diesem Mantelrohr fixierbar ist, und dass zur Einstellung des Druckes des Mediums in der Kammer ein betätigbares Ventil vorgesehen ist.

Mit dieser erfindungsgemässen Ausbildung der Sattelstütze ist eine konstruktiv sehr einfache Lösung erzielt worden, bei der entweder eine federnde oder starre Verbindung des Sattels zum Fahrradrahmen und/oder eine Höhenverstellbarkeit während dem Fahren ermöglicht ist. Zudem kann der Druck in der Kammer jederzeit geändert werden.

Bei einer sehr vorteilhaften Ausführung kann der Sattel während dem Fahren wahlweise federnd, starr oder in der Höhe verschoben werden. Dies wird erreicht, indem die am oberen Ende den Sattel haltende Kolbenstange innerhalb einer im Mantelrohr längsbewegbaren, hülsenförmigen Kolbenstange einer zweiten Kolben/Zylinder-Einheit verschiebbar geführt ist, wobei diese Kolbenstange von einer Klemmvorrichtung im Mantelrohr fixiert ist und sie und folglich der Sattel im gelösten Zustand dieser Klemmvorrichtung in der Höhe verstellt werden können.

Ausführungsbeispiele der Erfindung sowie weitere Vorteile derselben sind nachfolgend anhand der Zeichnung näher erläutert. Es zeigt:
- Fig.1: einen Längsschnitt durch eine erfindungsgemässe Sattelstütze,
- Fig.2: einen Querschnitt der Sattelstütze nach Fig.1 entlang der Linie II-II,
- Fig.3: einen schematischen Längsschnitt der Sattelstütze nach Fig.1,
- Fig.4: einen Längsschnitt durch eine andere Ausführung einer Sattelstütze, welche höhenverstellbar in einem Fahrradrahmen verschiebbar ist,
- Fig.5: einen Querschnitt der Sattelstütze nach Fig.4 entlang der Linie V-V,
- Fig.6: einen Längsschnitt einer Variante einer Sattelstütze,
- Fig.7: einen schematischen Längsschnitt einer weiteren Variante einer Sattelstütze,
- Fig.8: einen Querschnitt der Sattelstütze nach Fig.7 entlang der Linie VIII-VIII,
- Fig.9 - Fig. 11: jeweils eine Ausführungsform einer Klemmvorrichtung zum lösbaren Klemmen der Kolbeneinheit im Mantelrohr jeweils im Schnitt.

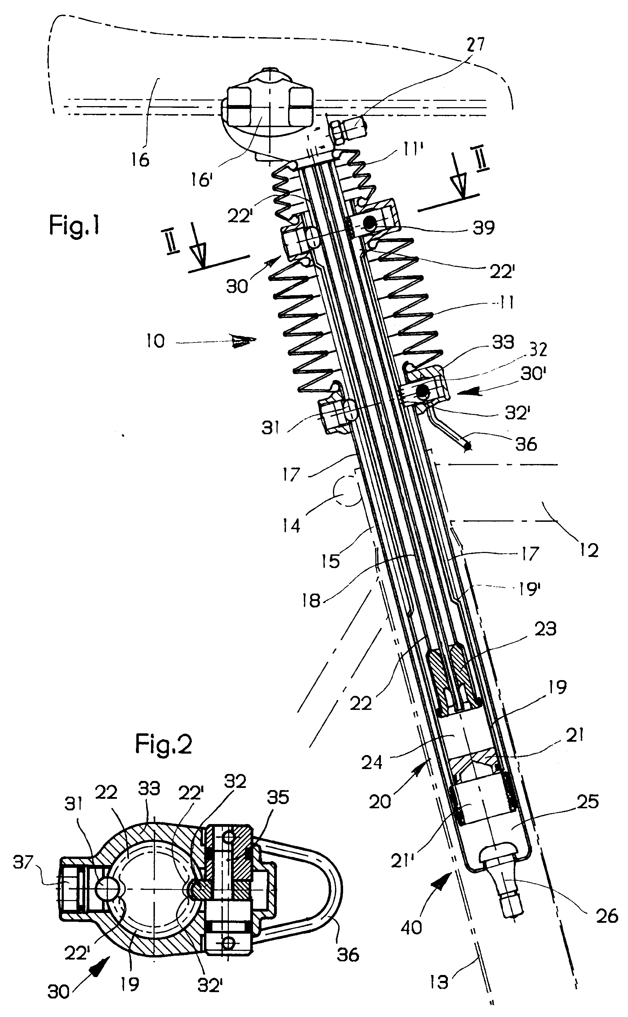

Fig.1 zeigt eine Sattelstütze 10, die in einem offenen Rohr 13 eines Fahrradrahmens 12, in vorliegendem Beispiel eines Fahrrades, in unterschiedlicher Höhe positionerbar ist. Die Sattelstütze 10 weist zu diesem Zwecke ein äusseres Mantelrohr 15 auf, das gleitend im offenen Rohr 13 geführt und darin mittels einer nicht näher verdeutlichten Spanneinrichtung 14 fixierbar ist. Das in dem offenen Rohr 13 des Fahrradrahmens 12 geführte und in beliebiger Höhe fixierbare Mantelrohr 15 ragt dabei oben über dieses Rohr 13 hinaus und in diesem ist eine Kolben/Zylinder-Einheit 20 mit einer am oberen Ende den Sattel 16 haltenden Kolbenstange 22 längsbeweglich geführt. Am unteren Ende von letzterer ist ein Kolben 23 vorgesehen, der von einem komprimierbaren gasförmigen Medium abgestützt ist, welches in einer vom Mantelrohr 15 und vom Kolben 23 gebildeten Kammer 24 enthalten ist.

Erfindungsgemäss ist bei dieser Sattelstütze 10 die Kolbenstange 22 und mit ihr der Sattel 16 zum Mantelrohr 15 federnd und in der Höhe verstellbar angeordnet. Die am oberen Ende den Sattel 16 haltende Kolbenstange 22 ist innerhalb einer im Mantelrohr 15 längsbewegbaren, hülsenförmigen Kolbenstange 19 einer zweiten Kolben/Zylinder-Einheit 40 verschiebbar geführt, welche sich aus dem unten geschlossenen Mantelrohr 15, der von diesem gebildeten Kammer 25, dem an letztere anschliessenden Zapfen 21 sowie aus der Kolbenstange 19 zusammensetzt. Diese Kolbenstange 19 ist mittels einer am oberen Ende des Mantelrohrs 15 befestigten Klemmvorrichtung 30' fixiert. Beim Lösen dieser Klemmvorrichtung 30' kann durch das Körpergewicht eines auf dem Sattel sitzenden Fahrers diese Kolbenstange 19 und demzufolge der Sattel 16 in der Höhe verstellt werden, indessen mit der anderen Kolbenstange 22 die Federung des Sattels bewirkt wird. Der Zapfen 21 kann annähernd über die gesamte Länge dieses Mantelrohrs 15 verstellt werden und die ihm zugeordnete Kolbenstange 19 erstreckt sich durch diese Klemmvorrichtung 30' bis annähernd unterhalb des Sattels 16, wobei am oberen Ende dieser Kolbenstange 19 die Klemmvorrichtung 30 fixiert ist.

In die vom Mantelrohr 15 und der in diesem geführten Zapfen 21 gebildete Kammer 25 ist wiederum ein komprimierbares gasförmiges Medium, insbesondere Luft, über das an der unteren Stirnseite des Mantelrohrs 15 gleichachsig zu diesem dicht befestigtes Ventil 26 eingeführt. Der Zapfen 21 ist vorzugsweise auf der Kammerseite mit einer Sacklochbohrung 21' versehen, wodurch das Volumen der Kammer 25 bzw. die Luftmenge darin erhöht wird und sich diese Luft dadurch über einen längeren Weg komprimieren lässt.

Das Ventil 26 ist vorteilhaft derart ausgebildet, dass durch dieses zum Beispiel Luft über ein in ihm integriertes Rückschlagventil eingelassen werden kann, sodass die Luft in der Kammer 25 verbleibt, dass aber die mit Überdruck eingefüllte Luft auf bekannte Art ausgelassen werden kann, bspw. durch ein manuelles Öffnen dieses Rückschlagventils. Das Ventil 26 ist darüberhinaus mit Vorteil derart ausgestaltet, dass an dieses eine zum Aufpumpen eines Radschlauches des Fahrrades verwendete Pumpe koppelbar ist, mittels welcher Luft in diese Kammer 25 zugeführt werden kann. Zu diesem Zwecke muss aber die Sattelstütze 10 aus dem Rohr 13 herausgenommen werden. Durch die wählbare Einstellung des Luftdruckes in dieser Kammer 25 lässt sich der Sattel 16 bei gelöster Klemmvorrichtung 30' je nach Bedarf mit mehr oder weniger Kraftaufwand nach unten schieben. Es ist empfehlenswert, den Druck dem Körpergewicht eines das Fahrrad benützenden Anwenders so einzustellen, dass dieser auf dem Sattel sitzend mit leichtem zusätzlichen Körperdruck eine Abwärtsbewegung dieses Sattels bewirken kann. Wenn er den Sattel wieder höher einstellen will, verschiebt sich der Sattel nach Lösen der Klemmvorrichtung 30' und nachdem er sich von diesem abhebt, von selbst nach oben. Dies lässt sich ganz individuell einstellen, was zu einem weiteren Vorteil dieser Erfindung führt.

Die Kolbenstange 19 weist im weiteren zwei gegenüberliegende, entlang ihrer Längsachse verlaufende rillenförmige Längsnuten 17 auf, die sich von oberhalb des Zapfens 21 bis annähernd ans obere Ende der Kolbenstange 19 ausdehnen, wobei in die eine Längsnut 17 ein die Verdrehsicherung bewirkendes Verbindungselement 31 und in die andere ein lösbarer Klemmkörper 32 eingreift. Damit ist diese Kolbenstange 19 im Mantelrohr 15 zum einen verdrehsicher und zum andern in der Höhe nach unten und nach oben begrenzt verschiebbar gehalten.

Die Kolbenstange 22 sowie der letzteren zugeordnete Kolben 23 sind innerhalb der Kolbenstange 19 über einen begrenzten Hub bewegbar angeordnet. Letztere weist zu diesem Zwecke eine die obere Endposition des Kolbens 23 festlegende Verjüngung 19' auf, welche von der Längsnut 17 gebildet ist, und nach unten hin ist dieser Kolben 23 durch das maximal mögliche Komprimieren des in der Kammer 24 befindlichen Mediums, für das insbesondere Luft vorgesehen ist, und durch den nachfolgenden Zapfen 21 positioniert. Die Kammer 24 ist über eine sich durch den Kolben 23 und durch die Kolbenstange 22 erstreckenden Leitung 18 mit dem unterhalb des Sattels 16 angeordneten Ventil 27 verbunden, welches dem oben bereits ausführlich erläuterten Ventil 26 entspricht. Durch den wählbaren Druck lässt sich je nach Bedarf eine weichere oder härtere Einstellung der Federung des Sattels 16 erzeugen, die wiederum vom Körpergewicht und auch vom Bedürfnis jedes einzelnen Fahrers abhängig ist. Zudem kann beim Fixieren der unterhalb des Sattels 16 angeordneten Klemmvorrichtung 30 diese pneumatische Federung aufgehoben und eine starre Verbindung zwischen der Kolbenstange 22 und der letztere umfassenden, die Klemmvorrichtung 30 am oberen Ende haltenden Kolbenstange 19 erzeugt werden.

Ferner ist zwischen den Klemmvorrichtungen 30, 30' einerseits bzw. unterhalb des Sattels 16 andererseits je ein runder, die jeweilige Kolbenstange 19, 22 umfassender und diese schützender Faltenbalg 11, 11' angeordnet. Der Sattel 16 ist im übrigen auf herkömmliche Art über eine nicht im Detail beschriebene Gelenkverbindung 16' mit der Kolbenstange 22 verbunden.

Fig.2 zeigt die Klemmvorrichtung 30, die am oberen Ende der Kolbenstange 19 befestigt ist und im wesentlichen einen letztere umfassenden Haltering 33, ein Verbindungselement 31, einen Klemmkörper 32, einen Exzenter 35 sowie einen an diesem gehaltenen Klemmbügel 36 umfasst. Das bolzenförmige Verbindungselement 31, das über eine Schraube 37 oder dergleichen im Haltering 33 positioniert ist, greift formschlüssig in die Längsnut 22' der Kolbenstange 22 ein, währenddem der gegenüberliegende Klemmkörper 32 von dem durch Verschwenkung des Klemmbügels 36 im Haltering 33 drehbaren Exzenter 35 in die andere Längsnut 22' ein- bzw. aus dieser herausschiebbar ist. Der Exzenter 35 ragt durch eine im Klemmkörper 32, senkrecht zur Verschieberichtung verlaufende Längsnut 39 und ist in seinem Querschnitt vorzugsweise dergestalt ausgebildet, dass er beim Hineinschieben des Klemmkörpers 32 nach dem vollständigen Eingreifen selbsthemmend verspannt ist. Die eine Stirnseite des Klemmkörpers 32 und die Kolbenstange 22 im Bereich ihrer einen Längsnut 22' weisen dabei je eine Verzahnung 32' auf, die bei eingeschobenem Klemmkörper 32 ineinandergreifen und eine formschlüssige Verbindung der beiden erzeugen. Die Verzahnung ist vorteilhaft mit sogenannten Sägezähnen verwirklicht, bei denen jeweils die untere Zahnflanke der Kolbenstange annähernd senkrecht zu ihrer Längsachse, indessen die obere in einem Winkel, bspw. zwischen 30 und 60 Winkelgraden, ausgebildet ist, währenddem die Zahnflanken der Klemmkörper sinngemäss umgekehrt ausgebildet sind. Dies ermöglicht eine optimal wirkende Verklemmung der Kolbenstange und es ist dadurch insbesondere eine achsiale Verschiebung derselben nach unten verhindert.

Die Klemmvorrichtung 30' ist analog zu der oben näher beschriebenen Klemmvorrichtung 30 ausgeführt und es wird daher auf diese obige Beschreibung verwiesen. Der einzige Unterschied besteht darin, dass mit ihr die Kolbenstange 19 mit dem etwas grösseren Aussendurchmesser fixiert bzw. gelöst werden kann. Die Längsnuten 17 der Kolbenstange 19 sind jeweils durch Verformung der hülsenförmigen Wandung derselben erzielt. Die sich dadurch ergebenden länglichen Einbuchtungen auf der Innenseite dieser Kolbenstange 19 greifen in die Längsnuten 22' der Kolbenstange 22 ein.

Mit dieser erfindungsmässigen Ausbildung der Sattelstütze 10 sind einem Fahrer eine Federung des Sattels und eine unabhängig von dieser wirkende Höhenverstellung zur Verfügung gestellt, bei denen er während dem Fahren - was ein markanter Vorteil ist - diese Federung ein-bzw. ausschalten oder den Sattel in der Höhe jederzeit verändern kann, zum Beispiel dann, wenn es nach einer Bergauffahrt abwärts geht und er dann den Sattel nach unten verstellen will, um in letzterem Falle primär den von ihm und dem Fahrrad entstehenden Schwerpunkt nach unten zu verlegen, um die Sturzgefahr zu reduzieren.

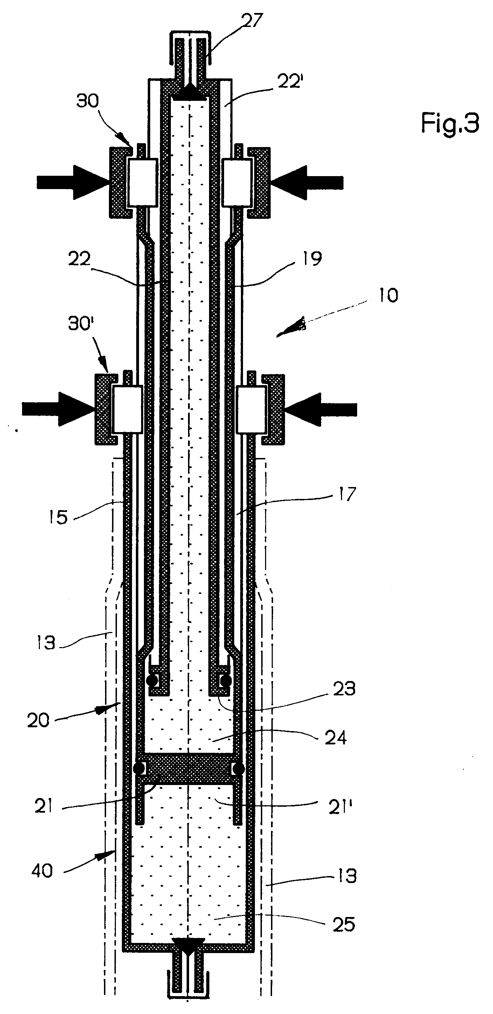

Die schematische Darstellung der Sattelstütze 10 gemäss Fig.3 verdeutlicht nochmals den Aufbau und die Wirkungsweise derselben. Aufgrund der Tatsache, dass diese Sattelstütze 10 sowohl eine Federung als auch eine Höhenverstellung für den Sattel vorsieht, sind die beiden Kolben/Zylinder-Einheiten 20, 40 in dem auf herkömmliche Weise in ein Rohr 13 eines Fahrradrahmens das Mantelrohr 15 enthalten. Die Kolben/Zylinder-Einheit 20 für die federnde Abstützung des Sattels ist dabei innerhalb der Kolbenstange 19 der Kolben/Zylinder-Einheit 40 ausgebildet. Es ist auf diesem Wege eine einfache und äusserst kurze Bauweise dieser Sattelstütze insgesamt erzielt.

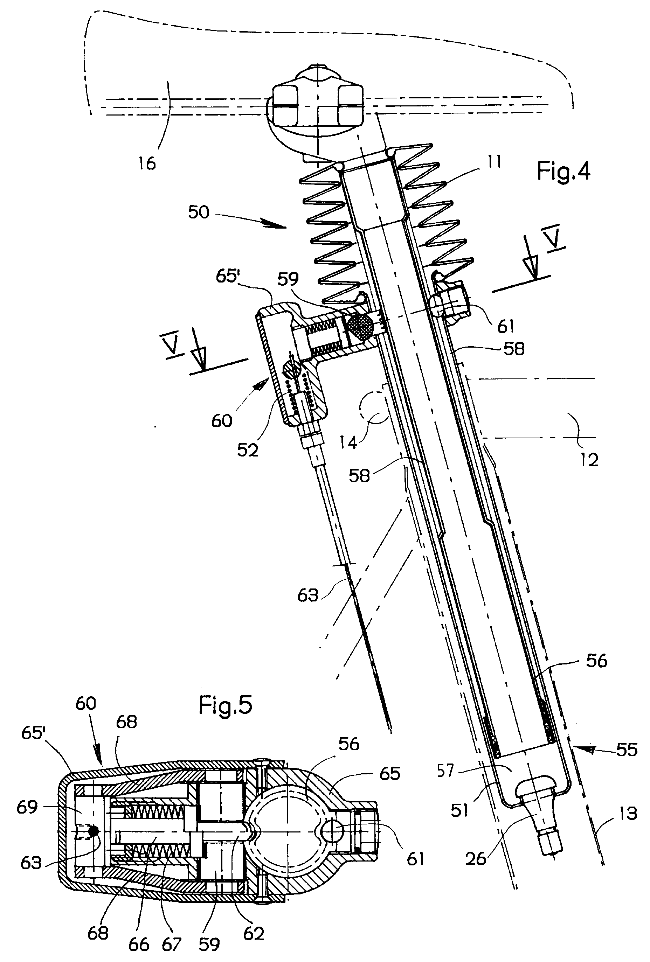

Fig.4 zeigt eine.Sattelstütze 50, die wiederum in einem offenen Rohr 13 eines Fahrradrahmens 12 über eine andeutungsweise veranschaulichte Spanneinrichtung 14 fixierbar ist. Sie weist im Unterschied zu derjenigen gemass Fig. 1 nur eine pneumatisch unterstützte Höhenverstellbarkeit, nicht aber eine Federung des Sattels 16 auf. Eine solche Sattelstütze 50 eignet sich daher vorzugsweise für Rennfahrräder, bei denen auf eine Federung verzichtet werden kann.

Für diese Höhenverstellung des Sattels 16 ist in einem Mantelrohr 51 eine Kolben/Zylinder-Einheit 55 integriert, die sich aus einer hohlen unten offenen Kolbenstange 56, aus dem den Zylinder bildenden Mantelrohr 51, aus einer das komprimierbare gasförmige Medium enthaltenden Kammer 57 sowie aus einem Ventil 26 zusammensetzt. Diese Kolben/Zylinder-Einheit 55 funktioniert an sich gleich wie die vergleichbare Einheit in Fig.1 und es sind daher nachfolgend nur noch die andersartigen Ausbildungen erläutert. Die rohrförmige Kolbenstange 56 weist zwei gegenüberliegende, entlang ihrer Längsachse verlaufende rillenförmige Längsnuten 58 auf, in die jeweils ein entsprechend geformtes Verbindungselement 61 bzw. ein Klemmkörper 62 einer am oberen Ende des Mantelrohrs 51 befestigte Klemmvorrichtung 60 formschlüssig eingreift. Damit ist diese Kolbenstange 56 im Mantelrohr 51 zum einen verdrehsicher und zum andern in der Höhe nach unten und nach oben begrenzt verschiebbar gehalten. Im weiteren ist durch ihre hohle Ausbildung und ihre die Kammer 57 erweiternde Öffnung ein maximal mögliches Volumen dieser Kammer 57 für das gasförmige Medium erzielt, wodurch dieser Kolben wiederum über eine erhöhte Hublänge mit einer sich dabei unwesentlich ändernden Kraft verschoben werden kann.

Die dieser Sattelstütze 50 zugehörige Klemmvorrichtung 60, die in Fig.5 zusätzlich im Schnitt gezeigt ist, ist ähnlich derjenigen gemäss Fig.1 aufgebaut und sie ist daher nicht mehr in jeder Einzelheit beschrieben. Der hauptsächliche Unterschied besteht jedoch darin, dass die Verschiebung des Klemmkörpers 62 nicht über einen unmittelbar beim Rohr 13 befindlichen Schwenkbügel 36, sondern über eine Kabelführung 63 erfolgt, welche vorzugsweise bis zu einer nicht näher gezeigten Lenkstange des Fahrrades geführt ist. Ein Fahrer kann daher ähnlich wie bei der Gangschaltung mittels Knopfdruck oder durch Drehen eines Schalthebels diese Klemmvorrichtung 60 in zwei Schaltzustände bringen, nämlich in einen die Kolbenstange 56 klemmenden, siehe Fig.5 obere Hälfte, bzw. in einen diesen freigebenden Zustand, siehe untere Hälfte der Fig.5. Zu diesem Zwecke ist in einem die Kolbenstange 56 umfassenden Haltering 65 ein von einer Druckfeder 67 beaufschlagter Bolzen 66 derart verschiebbar angeordnet, dass er den mit ihm verbundenen, wiederum eine Verzahnung aufweisenden Klemmkörper 62 gegen eine Verzahnung der Kolbenstange 56 drückt. Mittels eines einseitig abgeflachten Drehzapfens 59 lässt sich der Bolzen 66 und mit ihm der Klemmkörper 62 von der Kolbenstange 56 wegbewegen, welcher dann zusammen mit dem Sattel 16 in der Höhe verstellt werden kann. Dieser Drehzapfen 59 ist dabei über beidseitig an ihm angreifende Schwenkhebel 68 und einem Verbindungsteil 69 von dem an letzterem befestigten Kabel 63 drehbar angeordnet. In der Ausgangsstellung besteht kein Druck des Drehzapfens 59 auf den Bolzen 66, hingegen wenn letzterer durch Ziehen des Kabels 63 gedreht wird, wird der Klemmkörper 62 von der Kolbenstange weggestossen. Das gegenüberliegende Verbindungselement 61 bleibt dagegen stationär in der einen Längsnut der Kolbenstange 56. Ferner ist eine weitere Druckfeder 52 in einem mit dem Haltering 65 verbundenen Gehäuse 65' angeordnet, welche dafür sorgt, dass der Drehzapfen 59 - wenn keine Zugkraft des Kabels 63 erfolgt - in die nicht gegen den Bolzen 66 drückende Ausgangsposition geschwenkt ist. Mit dieser Klemmvorrichtung ergibt sich der Vorteil, dass bei einem Kabelriss nicht deren Klemmkraft gelöst wird und der Sattel sich demzufolge nicht plötzlich nach abwärts verschiebt.

Durch die Abflachung des Drehzapfens 59 und deren Anordnung zum Bolzen 66 wird erreicht, dass sich der Klemmkörper 62 beim Drehen des Drehzapfens zu Beginn um eine verhältnismässig grosse Distanz, hingegen nach einer Drehung von ca. 30 Winkelgraden nurmehr wenig verschiebt, da die auf den Bolzen wirkende äussere Kante des Drehzapfens dann annähernd senkrecht zur Verschieberichtung des Bolzens bewegt wird. Wenn die den Drehzapfen schwenkende Kabelführung mittels eines an der Lenkstange gelenkig gehaltenen Handgriffs bewegt wird, so ist auf letzteren bei der Einleitung des Lösens der Klemmvorrichtung 60 eine relativ grosse Kraft aufzubringen, die sich dann aber kontinuierlich verringert, wodurch die Handhabung des Lösens dieser Klemmvorrichtung optimal gelöst ist.

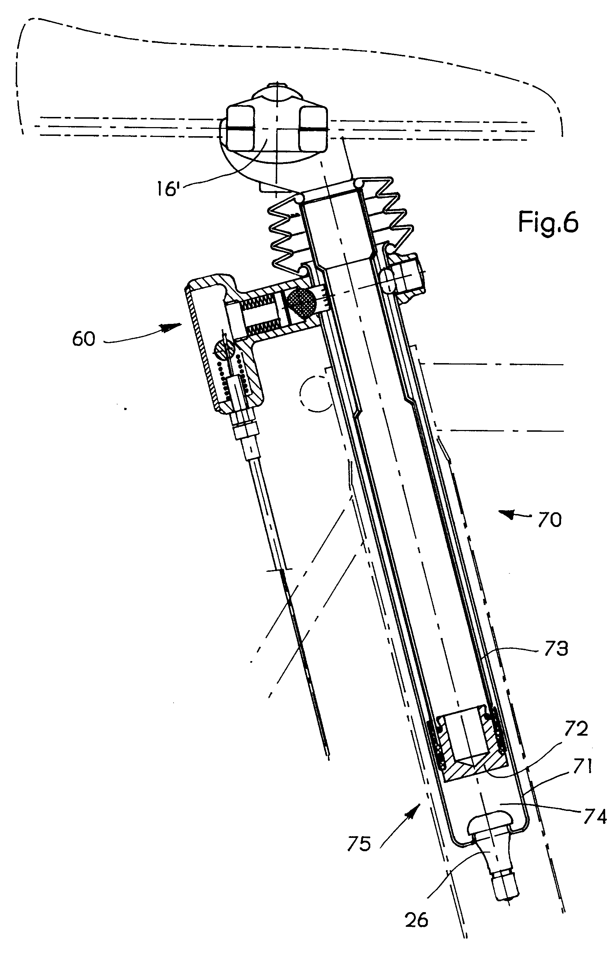

Die erfindungsgemässe Sattelstütze 70 gemäss Fig.6 unterscheidet sich von derjenigen nach Fig.4 dadurch, dass die in dem Mantelrohr 71 angeordnete Kolben/Zylinder-Einheit 75 nur für eine Federung des mit dieser am oberen Ende verbundenen Sattels vorgesehen ist. Diese Sattelstütze 70 weist ansonsten ebenfalls eine Klemmvorrichtung 60, einen Faltenbalg 11 und eine herkömmliche Gelenkverbindung 16' für den Sattel auf. Letztere ist am oberen Ende einer rohrförmigen Kolbenstange 73 angebracht, welche sich durch das Mantelrohr 71 erstreckt und unten einen Kolben 72 hat, der mit seiner Unterseite und dem Mantelrohr 71 eine mit einem komprimierbaren gasförmigen Medium mittels des Ventils 26 gefüllte Kammer 74 bildet. Diese ist im Vergleich zu derjenigen gemäss Fig.4 kleiner, damit eine optimale Federung erzielt wird. Die Klemmvorrichtung 60 kann wiederum vorteilhaft von der Fahrrad-Lenkstange aus betätigt werden, bei der sie in die Offen-, bzw. in die Klemmstellung gebracht werden kann. Im Normalfall ist diese jedoch im Unterschied zu derjenigen gemäss Fig.4 in geöffneter Position, so dass die Kolbenstange 73 und mit ihr der Sattel 16 federnd gelagert ist.

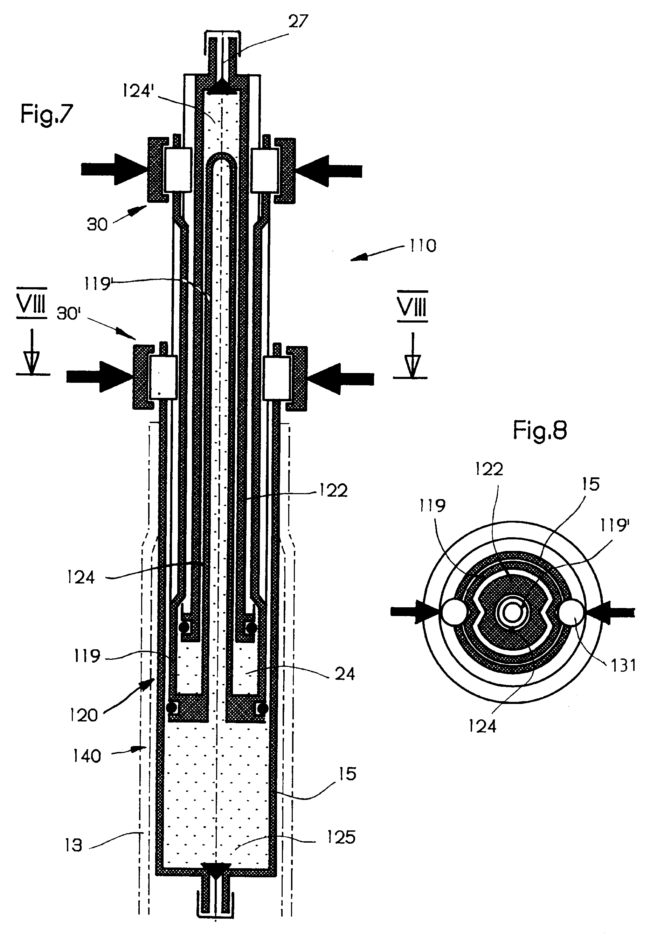

Fig.7 und Fig.8 zeigen in schematischer Darstellung eine Sattelstütze 110, die mit wenigen, nachfolgend erläuterten Ausnahmen gleich wie die Sattelstütze 10 gemäss Fig.1 gestaltet ist. Der eigentliche Unterschied ist darin zu sehen, dass die Kolbenstangen 119, 122 der Kolben/Zylinder-Einheiten 120, 140 hohlzylindrisch und nach unten offen ausgebildet sind. Dadurch entsteht für die mit vorzugsweise Luft gefüllte Kammer 125 ein bedeutend grösseres Volumen als bei der Sattelstütze 10, was den bereits oben erwähnten Vorteil mit sich bringt, nämlich dass diese für die Höhenverstellung des Sattels zuständige Kolbenstange 119 über einen längeren Hub verstellt werden kann. Die hohlzylindrische Kolbenstange 119 bildet eine ringförmige Öffnung, in der die Kammer 24 vorgesehen und die darin längsgeführte Kolbenstange 122 der Kolben/Zylinder-Einheit 140 eingeschoben ist. Zwischen der Kolbenstange 122 und dem inneren rohrförmigen Teil 119' der Kolbenstange 119 ist überdiese ein Ringspalt 124 gebildet, der sich von der Kammer 24 bis zu einer von der Oberseite des Teils 119' und der hohlen Kolbenstange 122 gebildeten Zusatzkammer 124' erstreckt, die mit dem nicht gezeigten Ventil 27 in Verbindung steht. Mit dieser Anordnung kann die Kammer 24 über dieses Ventil von aussen mit dem Medium bei einem regulierbaren Druck gefüllt werden.

Aus dem Querschnitt der Sattelstütze 110 von Fig.8 sind noch drei um 120 Winkelgrade versetzte Klemmkörper 131 ersichtlich, die wiederum in rillenförmige Längsnuten der Kolbenstange 119 eingreifen.

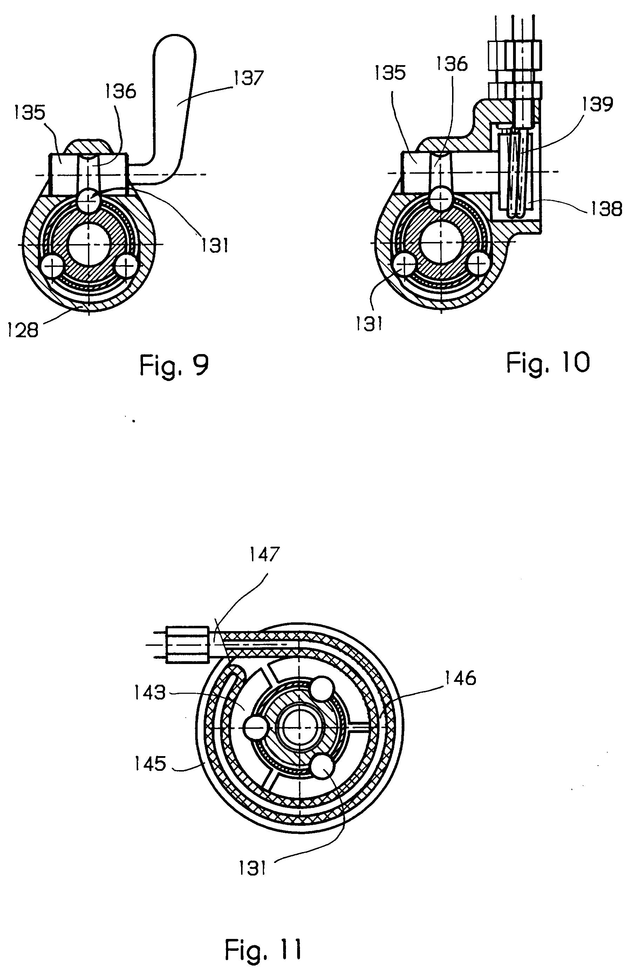

Fig.9 bis Fig.11 zeigen drei Ausführungsformen von Klemmvorrichtungen, bei welchen die Klemmkörper 131 analog zu denjenigen gemäss Fig.8 angeordnet sind. Bei den Ausführungen gemäss Fig.9 und Fig. 10 ist in einem an einer Kolbenstange befestigten Haltering 128 quer zur Kolbenstange ein Drehzapfen 135 gelagert, welcher eine zu seiner Drehachse exzentrische Ringnut 136 aufweist, mittels welcher der eine Klemmkörper 131 gegen eine Kolbenstange gedrückt oder freigegeben wird, wobei die andern beiden Klemmkörper 131 von der Gegenseite auf die Kolbenstange drücken. Der Drehzapfen 135 wird im ersten Fall von einem Griffhebel 137 und im andern Beispiel von einem Kabel 139 gedreht, wobei letzteres auf einer mit dem Drehzapfen 135 drehfest verbundenen Rolle 138 gewickelt ist.

Bei der Klemmvorrichtung gemäss Fig. 11 werden die Klemmkörper 131 gegen eine Kolbenstange gedrückt oder freigegeben, indem ein um die Kolbenstange sowie um die Klemmkörper 131 geführter Schlauch 147, der endseitig geschlossen ist, vorgesehen ist. Dieser Schlauch 147 ist aussenseitig von einem Gehäuse 145 umgeben und innen ist ein mehrteiliger Ring 143 oder dergleichen angeordnet, welcher an die Klemmkörper angrenzt. Für das Anpressen von letzteren an die Kolbenstange wird in den Schlauch 147 ein Medium unter Druck eingefüllt, welcher sich radial nach innen ausdehnt und über die Ringsegmente ein Andrücken der Klemmkörper 131 bewirkt.

Ein weiterer Vorteil dieser Sattelstütze nach der Erfindung ergibt sich dadurch, dass sie durch ihre vom Fahrrad unabhängige Fertigung auch an ein bestehendes Fahrrad nachgerüstet werden kann.

Das Mantelrohr kann in seinem Querschnitt im Prinzip auch anders als rund ausgebildet sein. Die vorgesehenen Kolben/Zylinder-Einheiten sind selbstverständlich so ausgestaltet, dass deren Kammern völlig abgedichtet sind. Der Druck kann sich jedoch in einer solchen Kammer mit der Zeit etwas abbauen. Über die Ventile lässt sich dieser mittels einer Fahrradpumpe oder dergleichen wiederherstellen.

Diese Sattelstütze nach der Erfindung eignet sich besonders für Fahrräder, sie könnte jedoch auch für einen Sitz eines Fahrzeuges, für einen Bürostuhl oder anderem eingesetzt werden.

Die Erfindung liesse sich selbstverständlich noch in weiteren Varianten dartun. Mit den erläuterten Ausführungsbeispielen ist sie jedoch ausreichend geoffenbart.

## Patentansprüche

1. Sattelstütze, insbesondere für ein Fahrrad, mit einem äusseren Mantelrohr (15), dadurch gekennzeichnet dass, das es in einem offenen Rohr (13) des Fahrradrahmens (12) in unterschiedlicher Höhe positionerbar ist und in dem eine Kolben/Zylinder-Einheit (20) ausgebildet ist, die eine am oberen Ende den Sattel (16) haltende Kolbenstange (22) und eine mit einem komprimierbaren gasförmigen Medium gefüllte Kammer (24) aufweist, und dass
die Kolbenstange (19,22,56,73) und mit ihr der Sattel (16) zum Mantelrohr (15,51,71) federnd und/oder in der Höhe verstellbar angeordnet sind, dass diese Kolbenstange (19,22,56,73) mittels mindestens einer Klemmvorrichtung (30,30',60) zum Mantelrohr (15,51,71) fixierbar ist, und dass zur Einstellung des Druckes des Mediums in der Kammer (24,25,57,74) ein betätigbares Ventil (26,27) vorgesehen ist.

2. Sattelstütze nach Anspruch 1, dadurch gekennzeichnet, dass eine Kolben/Zylinder-Einheit (20,120) für die Federung und eine zweite Kolben/Zylinder-Einheit (40,140) für die Höhenverstellung des Sattels (16) vorgesehen ist, wobei die am oberen Ende den Sattel (16) haltende Kolbenstange (22,122) innerhalb einer im Mantelrohr (15) längsbewegbaren, hülsenförmigen Kolbenstange (19,119) der zweiten Kolben/Zylinder-Einheit (40,140) verschiebbar geführt ist.

3. Sattelstütze nach Anspruch 2, dadurch gekennzeichnet, dass die erste Kolben/Zylinder-Einheit (20,120) aus der Kolbenstange (22,122), dem an dieser befestigten Kolben (23), der Kolbenstange (19,119) als Zylinder sowie aus einer Kammer (24) gebildet ist, währenddem die zweite Kolben/Zylinder-Einheit (40,140) aus der Kolbenstange (19,119) mit einem unteren Zapfen (21), dem Mantelrohr (15) als Zylinder sowie aus einer Kammer (25,125) gebildet ist.

4. Sattelstütze nach Anspruch 3, dadurch gekennzeichnet, dass zur Befestigung der Kolbenstange (19,119) im Mantelrohr (15) am oberen Ende von letzterem die Klemmvorrichtung (30') befestigt ist, derweil am oberen Ende dieser über das Mantelrohr (15) hinausragenden Kolbenstange (19,119) die zweite Klemmvorrichtung (30) befestigt ist, mittels der die innerhalb dieser Kolbenstange (19,119) geführte zweite Kolbenstange (22,122) festklemmbar ist, wobei durch die Klemmung von letzterer die Federung des Sattels (16) aufgehoben und eine starre Abstützung desselben erfolgt.

5. Sattelstütze nach einem der Ansprüche 2 bis 4, dadurch gekennzeichnet, dass die Kolbenstangen (119,122) hohlzylindrisch und nach unten offen ausgebildet sind, wobei die untere Kolbenstange (119) eine ringförmige Öffnung aufweist, in der die Kammer (24) vorgesehen und die darin längsgeführte Kolbenstange (122) der Kolben/Zylinder-Einheit (140) eingeschoben ist.

6. Sattelstütze nach einem der Ansprüche 1 bis 3, dadurch gekennzeichnet, dass nur eine Höhenverstellung des Sattels (16) möglich ist, bei der eine Kolben/Zylinder-Einheit (55), die vom Mantelrohr (51) als Zylinder, einem hohlen unten offenen Kolben (56), einer Kammer (57) sowie aus einem Ventil (26) gebildet ist, und im weiteren eine am oberen Ende des Mantelrohrs (51) befestigte Klemmvorrichtung (60) vorgesehen ist, mittels welcher der am oberen Ende den Sattel (16) haltende Kolben (56) in dem im Fahrradrahmen (12) fixierten Mantelrohr (51) in gelöstem Zustand verdrehsicher und begrenzt verschiebbar geführt ist.

7. Sattelstütze nach einem der vorhergehenden Ansprüche, dadurch gekennzeichnet, dass die Klemmvorrichtung (30,30',60) und die in ihr geführte Kolbenstange (22,19,56) derart zusammenwirken, dass bei gelöster Klemmvorrichtung (30,30',60) die Kolbenstange (22,19,56) in dieser verdrehsicher über einen begrenzten Hub verschiebbar angeordnet ist, indessen in geklemmtem Zustand die Kolbenstange (22,19,56) zu dem die Klemmvorrichtung haltenden Mantelrohr oder zur äusseren Kolbenstange fixiert ist.

8. Sattelstütze nach Anspruch 7, dadurch gekennzeichnet, dass die Kolbenstange (22,19,56) zwei entlang ihrer Längsachse verlaufende Längsnuten (22',17,58) mit je einer bestimmten Länge aufweist, wobei in die eine Längsnut (22',17,58) ein die Verdrehsicherung bewirkendes Verbindungselement (31,61) und in die andere ein lösbarer Klemmkörper (32,62) eingreift, welche beide in einem Haltering (33,65) der Klemmvorrichtung (30,30',60) positioniert sind, in dem die Kolbenstange (22,19,56) gleitend geführt ist.

9. Sattelstütze nach einem der vorhergehenden Ansprüche, dadurch gekennzeichnet, dass der Klemmkörper (32,62) und die Kolbenstange (22,19,56) in ihrer einen Längsnut (22',17) je eine Verzahnung (32') aufweisen, die im Klemmzustand ineinandergreifen und dabei eine formschlüssige Verbindung bilden.

10. Sattelstütze nach einem der vorhergehenden Ansprüche, dadurch gekennzeichnet, dass der Druck des Mediums, für das insbesondere Luft verwendet wird, in der Kammer (24,25,57,74) über ein im Mantelrohr (15,51,71) befestigtes Ventil (26,27) einstellbar ist, wobei das Ventil (26,27) als Rückschlagventil ausgebildet ist, welches von aussen geöffnet werden kann, und vorzugsweise an eine Pumpe anschliessbar ist, welche zum Aufpumpen eines Radschlauchs des Fahrrades benutzt wird.

11. Klemmvorrichtung vorzugsweise für eine Sattelstütze nach einem der vorhergehenden Ansprüche, mit einem die Kolbenstange umgreifenden Haltering (65), einem quer in diesem verstellbar angeordneten Klemmkörper (62), der von einer Feder gegen die Kolbenstange (56) gedrückt und mit dieser formschlüssig verbindbar ist oder von dieser manuell lösbar ist, dadurch gekennzeichnet, dass
als Feder eine koaxial zum Klemmkörper (62) verlaufende Druckfeder (67) vorgesehen ist, durch welche die Kolbenstange (56) vom Klemmkörper festgeklemmt wird, indessen der Klemmkörper von einem schwenkbaren Drehzapfen (59) von der Kolbenstange (56) weg bewegbar und letztere damit für eine Höhenverstellung der Sattelstütze freigegeben ist.

12. Klemmvorrichtung nach Anspruch 11, dadurch gekennzeichnet, dass ein mit dem Haltering (65) verbundenes Gehäuse (65') vorgesehen ist, darin der Klemmkörper (62), ein mit diesem verbundener Bolzen (66), die auf diesen wirkende Druckfeder (67) und der Drehzapfen (59) enthalten sind.

13. Klemmvorrichtung nach Anspruch 11 oder 12, dadurch gekennzeichnet, dass der Klemmkörper (62) von einer manuell betätigbaren Kabelführung (63) oder dergleichen in die zur Kolbenstange gelöste Stellung bewegbar ist.

## Claims

1. Saddle support, especially for a bicycle, with an outer pipe casing (15), characterized in that it can be positioned at different heights in an open pipe (13) of the bicycle frame (12) and is formed in a piston-cylinder unit (20), which has a piston rod (22) holding the saddle (16) on the upper end and a chamber (24) filled with a compressible gaseous medium, and that the piston rod (19, 22 56, 73) and with it, the saddle (16) are arranged flexibly to the pipe casing (15, 51, 71) and/or adjustably by height, that this piston rod (19, 22, 56, 73) can be fixed to the pipe casing (15, 51, 71) by means of at least one clamping device (30, 30', 60), and that an operable valve (26, 27) is provided for the adjustment of the pressure of the medium in the chamber (24, 25, 57, 74).

2. Saddle support according to claim 1, characterized in that a piston-cylinder unit (20, 120) is provided for the resilience and a second piston-cylinder unit (40, 140) is provided for the height adjustment of the saddle (16), whereby the piston rod (22, 122) holding the saddle (16) on the upper end is conducted shiftably within a sheath-shaped piston rod (19, 119) of the second piston-cylinder unit (40, 140), which is movable longitudinally in the pipe casing (15).

3. Saddle support according to claim 2, characterized in that the first piston-cylinder unit (20, 120) is formed by the piston rod (22, 122), the piston (23) attached to this, the piston rod (19, 119) as cylinder as well as a chamber (24), while the second piston-cylinder unit (40, 140) is formed by the piston rod (19, 119) with a lower peg (21), the pipe casing (15) as cylinder as well as a chamber (25, 125).

4. Saddle support according to claim 3, characterized in that the clamping device (30') is attached on the upper end of the pipe casing (15) for attaching the piston rod (19, 119) in the pipe casing (15), while on the upper end of this piston rod (19, 119) extending out over the pipe casing (15) the second clamping device (30) is attached, by means of which the second piston rod (22, 122) can be clamped tightly within this piston rod (19, 119), whereby the resilience of the saddle (16) is lifted by the clamping of the latter and a rigid support of the same results.

5. Saddle support according to anyone of the claims 2 to 4, characterized in that the piston rods (119, 122) are formed as hollow cylinders open underneath, whereby the lower piston rod (119) has a ring-shaped opening in which the chamber (24) is provided and into which the longitudinally conducted piston rod (122) of the piston-cylinder unit (140) is pushed.

6. Saddle support according to anyone of the claims 1 to 3, characterized in that a height adjustment of the saddle (16) is only possible in which a piston-cylinder unit (55), which is formed from a pipe casing (51) as a cylinder, a hollow piston (56) which is open underneath, a chamber (57) as well as a valve (26), and furthermore, a clamping device (60) attached on the upper end of the pipe casing (51) is provided, by means of which the piston (56) holding the saddle (16) on its end is conducted securely against twisting and limited shiftably in the pipe casing (51) fixed in the bicycle frame (12).

7. Saddle support according to anyone of the preceding claims, characterized in that the clamping device (30, 30', 60) and the piston rod (22, 19, 56) conducted in it, work together so that for a released clamping device (30, 30', 60) the piston rod (22, 19, 56) is arranged in this shiftably and secure against twisting by a limited stroke, whereas in clamped condition, the piston rod (22, 19, 56) is fixed to the pipe casing holding the clamping device or to the outer piston rod.

8. Saddle support according to claim 7, characterized in that the piston rod (22, 19, 56) has two longitudinal grooves (22', 17, 58) running along its longitudinal axis, each with a given length, whereby in the one longitudinal axis, each with a given length, whereby in the one longitudinal groove (22', 27, 58) a connection element (31, 61) engages causing the securing against twisting and in the other a releasable clamping unit (32, 62) engages, which are both positioned in a holding ring (33, 65) of the clamping device (30, 30', 60), in which the piston rod (22, 19, 56) is conducted smoothly.

9. Saddle support according to anyone of the preceding claims, characterized in that the clamping unit (32, 62) and the piston rod (22, 19, 56) each have a toothing (32') in their one longitudinal groove (22', 17), which engage in one another in the clamping mode and thus form an interlocking connection.

10. Saddle support according to anyone of the preceding claims, characterized in that the pressure of the medium, for which air is used in particular, is adjustable in the chamber (23, 25, 57, 74) by a valve (26, 27) attached in the pipe casing (15, 51, 71), whereby the valve (26, 27) is designed as a non-return valve, which can be opened from the outside and preferably can be connected to a pump, which is used to pump up a tire tube for the bicycle.

11. Clamping device preferable for a saddle support according to anyone of the preceding claims, having a holding ring (65) encompassing the piston rod and a clamping unit (62) is provided, which is arranged adjustably in the holding ring (65) transverse to the piston rod held in this, and thus is pressed by a spring against the piston rod (56) and can be released from this or connected with this frictionally or interlocking, characterized in that
a pressure spring (67) is provided as spring, which is coaxial running to the clamping unit (62) and through which the piston rod (56) is clamped by the clamping unit, whereas by a swivable rotational peg (59) the clamping unit is movable away from the piston rod (56) and the latter is released for a height adjustment of the saddle support.

12. Clamping device according to claim 11, characterized in that a housing (65') is provided connected with the holding ring (65), in which comprise the clamping unit (62), a bolt (66) connected with the latter, the pressure spring (67) working on the bolt and the rotational peg (59).

13. Clamping device according to claim 11 or 12, characterized in that the clamping unit (62) can be moved into a released position to the piston rod by a manually operated cable conduction (63) or similar item.

## Revendications

1. Tige de selle, en particulier pour une bicyclette, comportant un tube de protection extérieur (15), caractérisée en ce qu'elle peut être positionnée à différentes hauteurs dans un tube ouvert (13) du cadre de bicyclette (12), et qu'une unité à piston/cylindre (20) y est installée, qui comporte une tige de piston (22), qui maintient la selle (16) en son extrémité supérieure, ainsi qu'une chambre (24) remplie d'un milieu gazeux compressible, et en ce que la tige de piston (19, 22, 56, 73) et, avec elle, la selle (16), sont disposées d'une manière élastique par rapport au tube de protection (15, 51, 71) et/ou en étant réglables en hauteur ; que cette tige de piston (19, 22, 56, 73) peut être fixée au tube de protection (15, 51, 71) à l'aide d'au moins un dispositif de serrage (30, 30', 60) ; et qu'une vanne réglable (26, 27) est prévue pour ajuster la pression du fluide dans la chambre (24, 25, 57, 74).

2. Tige de selle selon la revendication 1, caractérisée en ce qu'une unité à piston/cylindre (20, 120) est prévue pour la suspension et une deuxième unité à piston/ cylindre (40, 140) est prévue pour le réglage en hauteur de la selle (16), la tige de piston (22, 122) qui maintient la selle (16) en son extrémité supérieure étant guidée en coulissement à l'intérieur d'une tige de piston (19, 119) de la deuxième unité à piston/cylindre (40, 140), cette dernière tige de piston ayant la forme d'un fourreau et pouvant se déplacer longitudinalement dans le tube de protection (15).

3. Tige de selle selon la revendication 2, caractérisée en ce que la première unité à piston/cylindre (20, 120) est formée par la tige de piston (22, 122), du piston (23) qui y est fixé, de la tige de piston (19, 119) servant de cylindre, ainsi que d'une chambre (24), tandis que la deuxième unité à piston/cylindre (40, 140) est constituée de la tige de piston (19, 119) comportant un tourillon inférieur (21), du tube de protection (15) servant de cylindre, ainsi que d'une chambre (25, 125).

4. Tige de selle selon la revendication 3, caractérisée en ce que, pour fixer la tige de piston (19, 119) dans le tube de protection (15), le dispositif de serrage (30') est fixé en l'extrémité supérieure de ce tube de protection, tandis que, à l'extrémité supérieure de cette tige de piston (19, 119) qui dépasse du tube de protection (15), est fixé le deuxième dispositif de serrage (30), à l'aide duquel peut être bloquée la deuxième tige de piston (22, 122) guidée à l'intérieur de cette tige de piston (19, 119), le serrage de la tige de piston (22, 122) supprimant la suspension de la selle (16), avec en conséquence un appui rigide pour cette dernière.

5. Tige de selle selon l'une des revendications 2 à 4, caractérisée en ce que les tiges de piston (119, 122) ont la forme de cylindres creux ouverts vers le bas, la tige de piston inférieure (119) comportant une ouverture annulaire, dans laquelle est prévue la chambre (24), et dans laquelle est emmanchée la tige de piston (122), qui y est guidée longitudinalement, de l'unité à piston/cylindre (140).

6. Tige de selle selon l'une des revendications 1 à 3, caractérisée en ce que seul est possible un réglage en hauteur de la selle (16), pour lequel sont prévus une unité à piston/cylindre (55), qui est constituée du tube de protection (51) servant de cylindre, d'un piston (56) creux et ouvert vers le bas, d'une chambre (57), ainsi que d'une vanne (26), et par ailleurs un dispositif de serrage (60), fixé à l'extrémité supérieure du tube de protection (51), dispositif de serrage à l'aide duquel le piston (56) qui maintient la selle (16) en son extrémité supérieure est, à l'état desserré, guidé sans pouvoir subir de rotation et avec une translation limitée dans le tube de protection (51) fixé dans le cadre de bicyclette (12).

7. Tige de selle selon l'une des revendications précédentes, caractérisée en ce que le dispositif de serrage (30, 30', 60) et la tige de piston (22, 19, 56) qui y est guidée coopèrent de telle sorte que, quand le dispositif de serrage (30, 30', 60) est desserré, la tige de piston (22, 19, 56) est disposée dans cette dernière, sans pouvoir subir de rotation, et en pouvant coulisser sur une course limitée, tandis que, à l'état serré, la tige de piston (22, 19, 56) est fixée au tube de protection qui maintient le dispositif de serrage, ou à la tige de piston extérieure.

8. Tige de selle selon la revendication 7, caractérisée en ce que la tige de piston (22, 19, 56) comporte deux rainures longitudinales (22', 17, 58), qui courent le long de son axe longitudinal, ayant chacune une certaine longueur, un élément de liaison (31, 61), agissant sur le blocage en rotation, entrant en prise dans l'une des rainures longitudinales (22', 17, 58), l'autre entrant en prise dans un corps de serrage amovible (32, 62), les deux rainures longitudinales étant positionnées dans un anneau de blocage (33, 65) du dispositif de serrage (30, 30', 60), dans lequel la tige de piston (22, 19, 56) est guidée en glissement.

9. Tige de selle selon l'une des revendications précédentes, caractérisée en ce que le corps de serrage (32, 62) et la tige de piston (22, 19, 56) comportent chacun, dans l'une de leurs rainures longitudinales (22', 17) un engrenage (32'), les deux engrenages entrant en prise l'un avec l'autre à l'état serré, en formant une liaison avec correspondance de forme.

10. Tige de selle selon l'une des revendications précédentes, caractérisée en ce que la pression du milieu, pour lequel on utilise en particulier de l'air, dans la chambre (24, 25, 57, 74) peut être ajustée par une vanne (26, 27) fixée à l'intérieur du tube de protection (15, 51, 71), la vanne (26, 27) étant configurée comme un clapet de non retour, qui peut être ouvert de l'extérieur et de préférence est raccordé à une pompe, qui est utilisée pour gonfler la chambre à air d'une roue de la bicyclette.

11. Dispositif de serrage, de préférence pour une tige de selle selon l'une des revendications précédentes, comportant un anneau de blocage (65), qui entoure la tige de piston, un corps de serrage (62), disposé de façon à pouvoir coulisser transversalement dans ce dernier, corps de serrage qui par un ressort est appuyé contre la tige de piston (56) et peut être lié à cette dernière par une liaison avec correspondance de forme, ou qui peut en être détaché manuellement, caractérisé en ce qu'on prévoit en tant que ressort un ressort de compression (67), qui court dans la même direction que l'axe du corps de serrage (62), ressort de compression grâce auquel la tige de piston (56) est bloquée par le corps de serrage, le corps de serrage pouvant, grâce à un tourillon pivotant (59), s'éloigner de la tige de piston (56), cette dernière étant ainsi dégagée pour permettre un réglage en hauteur de la tige de selle.

12. Dispositif de serrage selon la revendication 11, caractérisé en ce qu'on prévoit un carter (65'), relié à l'anneau de blocage (65), carter dans lequel sont contenus le corps de serrage (62), un boulon (66) relié à ce dernier, le ressort de compression (67) agissant sur ce dernier, et le tourillon (59).

13. Dispositif de serrage selon la revendication 11 ou 12, caractérisé en ce que le corps de serrage (62) peut, grâce à un tube guide-fil (63) pouvant être manoeuvré à la main, ou analogues, être déplacé pour prendre la position desserrée par rapport à la tige de piston.
